# EUROPEAN PATENT APPLICATION

(11) **EP 4 391 704 A1**
(43) Date of publication of application: **26.06.2024**
(21) Application number: 22869262.0
(22) Date of filing: 14.09.2022
(51) Int. Cl.: H04W 76/18

(54) **CONTINUOUS LBT FAILURE PROCESSING METHOD AND APPARATUS, AND TERMINAL AND NETWORK-SIDE DEVICE**

(30) Priority: 16.09.2021 CN 202111087689
(71) Applicant: Vivo Mobile Communication Co., Ltd., Dongguan, Guangdong 523863 (CN)
(72) Inventor: LIU, Jiamin, Dongguan, Guangdong 523863 (CN); BAO, Wei, Dongguan, Guangdong 523863 (CN)
(74) Representative: Murgitroyd & Company
(86) International application number: PCT/CN2022/118726
(87) International publication number: WO 2023/040893

(57) **Abstract**

This application discloses a consistent LBT failure processing method and apparatus, a terminal, and a network side device, and pertains to the field of communication technologies. The consistent LBT failure processing method includes: in a case that consistent LBT failures occur on an unlicensed band, a first terminal performs a first failure processing operation. The first failure processing operation includes at least one of following: performing an SL RLF operation on a sidelink SL corresponding to the unlicensed band; reporting the consistent LBT failures to a network side device; suspending the SL corresponding to the unlicensed band; and performing SL transmission on a resource of a licensed band.

## Description

### CROSS-REFERENCE TO RELATED APPLICATION

This application claims priority to Chinese Patent Application No. 202111087689.2, filed in China on September 16, 2021, which is incorporated herein by reference in its entirety.

### TECHNICAL FIELD

This application pertains to the field of communication technologies, and specifically relates to a consistent listen before talk (listen before talk, LBT) failure processing method and apparatus, a terminal, and a network side device.

### BACKGROUND

Sidelink (sidelink, SL) communication is direct communication between terminals without using a network side device.

In a conventional technology, SL communication may be performed between the terminals through an unlicensed band (unlicensed band, UB). Before sending a message through an unlicensed band, the terminal needs to perform LBT on the unlicensed band to detect whether the unlicensed band is occupied. If a result of the LBT indicates that the unlicensed band is occupied, it is recorded as an LBT failure. If consistent LBT failures occur on the unlicensed band within a period of time, it indicates that the unlicensed band is unavailable.

Currently, in a case that SL communication is performed through the unlicensed band, there is no corresponding solution for the consistent LBT failures. Therefore, how to process the consistent LBT failures in the SL communication becomes an urgent problem to be solved.

### SUMMARY

Embodiments of this application provide a consistent LBT failure processing method and apparatus, a terminal, and a network side device, so that a problem of consistent LBT failures in SL communication can be resolved.

According to a first aspect, a consistent LBT failure processing method is provided, and the method includes: In a case that consistent LBT failures occur on an unlicensed band, a first terminal performs a first failure processing operation.

The first failure processing operation includes at least one of the following:
performing an SL RLF operation on an SL corresponding to the unlicensed band;
reporting the consistent LBT failures to a network side device;
suspending the SL corresponding to the unlicensed band; and
performing SL transmission on a resource of a licensed band.

According to a second aspect, a consistent LBT failure processing method is provided, and the method includes: A network side device configures first information for a first terminal. The first information indicates a first failure processing operation performed in a case that consistent LBT failures occur on an unlicensed band.

The first failure processing operation includes at least one of the following:
performing an SL RLF operation on an SL corresponding to the unlicensed band;
reporting the consistent LBT failures to the network side device;
suspending the SL corresponding to the unlicensed band; and
performing SL transmission on a resource of a licensed band.

According to a third aspect, a consistent LBT failure processing method is provided, and the method includes: In a case that it is determined that a first terminal has experienced consistent LBT failures on an unlicensed band, a second terminal performs a second failure processing operation. The first terminal is a terminal that has established a sidelink SL with the second terminal.

The second failure processing operation includes any one of the following:
suspending the SL between the second terminal and the first terminal;
transmitting data that is between the second terminal and the first terminal in a HARQ feedback disabled manner; and
releasing the SL between the second terminal and the first terminal.

According to a fourth aspect, a consistent LBT failure processing apparatus is provided, and the apparatus includes a processing module. The processing module is configured to: in a case that consistent LBT failures occur on an unlicensed band, perform a first failure processing operation.

The first failure processing operation includes at least one of the following:
performing an SL RLF operation on an SL corresponding to the unlicensed band;
reporting the consistent LBT failures to a network side device;
suspending the SL corresponding to the unlicensed band; and
performing SL transmission on a resource of a licensed band.

According to a fifth aspect, a consistent LBT failure processing apparatus is provided, and the apparatus includes a configuring module. The configuring module is used to configure first information for a first terminal. The first information indicates a first failure processing operation performed in a case that consistent LBT failures occur on an unlicensed band.

The first failure processing operation includes at least one of the following:
performing an SL RLF operation on an SL corresponding to the unlicensed band;
reporting the consistent LBT failures to a network side device;
suspending the SL corresponding to the unlicensed band; and
performing SL transmission on a resource of a licensed band.

According to a sixth aspect, a consistent LBT failure processing apparatus is provided, and the apparatus includes a processing module. The processing module is configured to: in a case that it is determined that a first terminal has experienced consistent LBT failures on an unlicensed band, perform a second failure processing operation. The first terminal is a terminal that has established a sidelink SL with a second terminal.

The second failure processing operation includes any one of the following:
suspending the SL between the second terminal and the first terminal;
transmitting data that is between the second terminal and the first terminal in a HARQ feedback disabled manner; and
releasing the SL between the second terminal and the first terminal.

According to a seventh aspect, a first terminal is provided. The first terminal includes a processor, a memory, and a program or instructions stored in the memory and executable on the processor. When the program or instructions are executed by the processor, steps of the method according to the first aspect are implemented.

According to an eighth aspect, a network side device is provided. The network side device includes a processor, a memory, and a program or instructions stored in the memory and executable on the processor. When the program or instructions are executed by the processor, steps of the method according to the second aspect are implemented.

According to a ninth aspect, a second terminal is provided. The second terminal includes a processor, a memory, and a program or instructions stored in the memory and executable on the processor. When the program or instructions are executed by the processor, steps of the method according to the third aspect are implemented.

According to a tenth aspect, a first terminal is provided, and the first terminal includes a processor. The processor is configured to: in a case that a first terminal has experienced consistent LBT failures on an unlicensed band, perform a first failure processing operation.

The first failure processing operation includes at least one of the following:
performing an SL RLF operation on an SL corresponding to the unlicensed band;
reporting the consistent LBT failures to a network side device;
suspending the SL corresponding to the unlicensed band; and
performing SL transmission on a resource of a licensed band.

According to an eleventh aspect, a network side device is provided, and the network side device includes a processor. The processor is used to configure first information for a first terminal. The first information indicates a first failure processing operation performed in a case that consistent LBT failures occur on an unlicensed band.

The first failure processing operation includes at least one of the following:
performing an SL RLF operation on an SL corresponding to the unlicensed band;
reporting the consistent LBT failures to the network side device;
suspending the SL corresponding to the unlicensed band; and
performing SL transmission on a resource of a licensed band.

According to a twelfth aspect, a second terminal is provided, and the second terminal includes a processor. The processor is configured to: in a case that it is determined that a first terminal has experienced consistent LBT failures on an unlicensed band, perform a second failure processing operation. The first terminal is a terminal that has established an SL with a second terminal.

The second failure processing operation includes any one of the following:
suspending the SL between the second terminal and the first terminal;
transmitting data that is between the second terminal and the first terminal in a HARQ feedback disabled manner; and
releasing the SL between the second terminal and the first terminal.

According to a thirteenth aspect, a first terminal is provided. The terminal includes a processor, a memory, and a program or instructions stored in the memory and executable on the processor. When the program or instructions are executed by the processor, steps of the method according to the first aspect are implemented.

According to a fourteenth aspect, a network side device is provided. The network side device includes a processor, a memory, and a program or instructions stored in the memory and executable on the processor. When the program or instructions are executed by the processor, steps of the method according to the second aspect are implemented.

According to a fifteenth aspect, a second terminal is provided. The terminal includes a processor, a memory, and a program or instructions stored in the memory and executable on the processor. When the program or instructions are executed by the processor, steps of the method according to the third aspect are implemented.

According to a sixteenth aspect, a readable storage medium is provided. The readable storage medium stores a program or instructions. When the program or the instructions are executed by a processor, steps of the method according to the first aspect are implemented, steps of the method according to the second aspect are implemented, or steps of the method according to the third aspect are implemented.

According to a seventeenth aspect, a chip is provided. The chip includes a processor and a communication interface. The communication interface is coupled to the processor. The processor is configured to run a program or instructions, to implement the method according to the first aspect, the method according to the second aspect, or the method according to the third aspect.

According to an eighteenth aspect, a computer program/program product is provided. The computer program/program product is stored in a non-volatile storage medium. The program/program product is executed by at least one processor, to implement the steps of the consistent LBT failure processing method according to the first aspect, the steps of the consistent LBT failure processing method according to the second aspect, or the steps of the consistent LBT failure processing method according to the third aspect.

In embodiments of this application, in a case that the consistent LBT failures occur on the unlicensed band, the first terminal performs the first failure processing operation. In this solution, in a case that the consistent LBT failures occur on the unlicensed band, the first terminal may perform the first failure processing operation, so that the consistent LBT failures in SL communication can be processed. In this way, a case that a terminal (for example, a local terminal) cannot process the consistent LBT failures in a process of performing SL communication through the unlicensed band can be avoided.

In addition, in a case that the first terminal has experienced the consistent LBT failures on the unlicensed band, the second terminal performs the second failure processing operation. In this solution, in a case that the first terminal has experienced the consistent LBT failures on the unlicensed band, the second terminal may perform the second failure processing operation, so that the consistent LBT failures in SL communication can be processed. In this way, a case that a terminal (for example, a peer terminal) cannot process the consistent LBT failures in a process of performing SL communication through the unlicensed band can be avoided.

### BRIEF DESCRIPTION OF DRAWINGS

FIG. 1 is a schematic diagram of a structure of a wireless communication system according to an embodiment of this application;
FIG. 2 is a first schematic flowchart of a consistent LBT failure processing method according to an embodiment of this application;
FIG. 3 is a second schematic flowchart of a consistent LBT failure processing method according to an embodiment of this application;
FIG. 4 is a third schematic flowchart of a consistent LBT failure processing method according to an embodiment of this application;
FIG. 5 is a fourth schematic flowchart of a consistent LBT failure processing method according to an embodiment of this application;
FIG. 6 is a first schematic diagram of a structure of a consistent LBT failure processing apparatus according to an embodiment of this application;
FIG. 7 is a second schematic diagram of a structure of a consistent LBT failure processing apparatus according to an embodiment of this application;
FIG. 8 is a third schematic diagram of a structure of a consistent LBT failure processing apparatus according to an embodiment of this application;
FIG. 9 is a schematic diagram of a structure of a communication device according to an embodiment of this application;
FIG. 10 is a schematic diagram of a structure of a terminal according to an embodiment of this application; and
FIG. 11 is a schematic diagram of a structure of a network side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specific order or sequence. It should be understood that, the terms used in such a way are interchangeable in proper circumstances, so that the embodiments of this application can be implemented in an order other than the order illustrated or described herein. Objects classified by "first" and "second" are usually of a same type, and the number of objects is not limited. For example, there may be one or more first objects. In addition, in the specification and claims, "and/or" represents at least one of connected objects, and a character "/" generally represents an "or" relationship between associated objects.

In addition, in the descriptions of this application, "a plurality of" means two or more than two unless otherwise specified. "At least one of the following items (pieces)" or a similar expression thereof refers to any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

For ease of understanding, a wireless communication system to which embodiments of this application may be applied and related concepts in embodiments of this application are first briefly described.

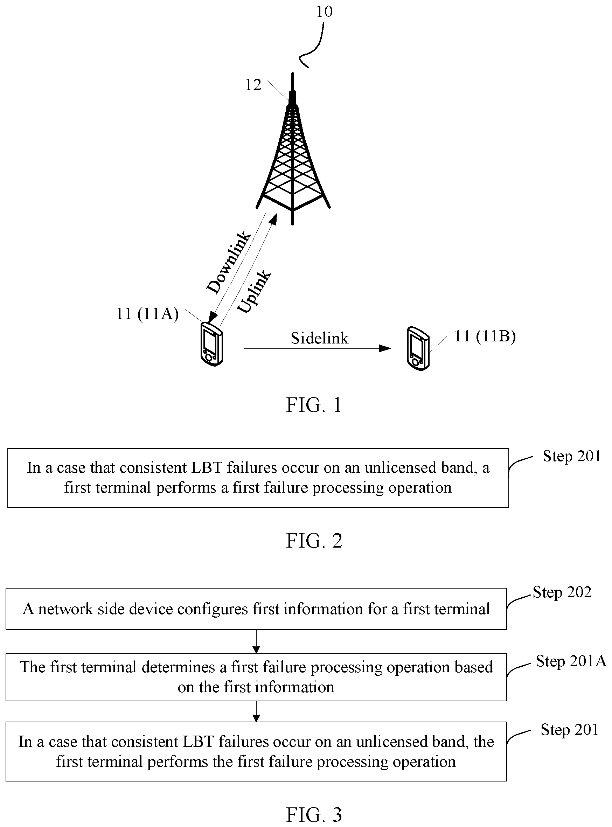

FIG. 1 shows a wireless communication system 10 to which embodiments of this application may be applied. As shown in FIG. 1, the wireless communication system 10 includes a network side device 12 and a plurality of terminals 11. A communication link may be established between the terminal 11 and the network side device 12, and data transmission is performed through the link. A link through which the terminal 11 sends data to the network side device 12 is referred to as an uplink (uplink, UL), and a link through which the network side device 12 sends data to the terminal 11 is referred to as a downlink (downlink, DL).

In addition, in the wireless communication system shown in FIG. 1, a communication link may also be established between the terminal 11 and the terminal 11, and the link is referred to as a sidelink (sidelink, SL). The sidelink between terminals 11 mainly includes three transmission manners: unicast (unicast) transmission, broadcast (broadcast) transmission, and multicast (multicast) transmission. The unicast transmission may be communication between a transmitting terminal and a receiving terminal, as shown in FIG. 1. The multicast transmission may be communication between a transmitting terminal and a group of receiving terminals. The broadcast transmission may be communication between a transmitting terminal and a plurality of receiving terminals. For ease of description, in embodiments of this application, the transmitting terminal is referred to as a first terminal, and the receiving terminal is referred to as a second terminal. For example, as shown in FIG. 1, a terminal 11A is the first terminal, and a terminal 11B is the second terminal.

It should be noted that a consistent LBT failure processing method provided in embodiments of this application is applicable to all the three transmission manners. It may be understood that in broadcast transmission and multicast transmission scenarios, there are a plurality of second terminals.

It is worth noting that the wireless communication system 10 shown in FIG. 1 may be applied to various communication systems, for example, a long term evolution (Long Term Evolution, LTE)/LTE-Advanced (LTE-Advanced, LTE-A) system, a code division multiple access (Code Division Multiple Access, CDMA) system, a time division multiple access (Time Division Multiple Access, TDMA) system, a frequency division multiple access (Frequency Division Multiple Access, FDMA) system, an orthogonal frequency division multiple access (Orthogonal Frequency Division Multiple Access, OFDMA) system, a single-carrier frequency-division multiple access (Single-carrier Frequency-Division Multiple Access, SC-FDMA) system, a 5th generation (5th generation, 5G) system, a new radio (new radio, NR) system, or another future network, such as a 6th Generation (6th Generation, 6G) system. This is not specifically limited in embodiments of this application. In addition, the terms "system" and "network" in embodiments of this application are often used interchangeably. The technology described herein may be used in the above-mentioned systems and radio technologies as well as other systems and radio technologies.

The terminal 11 in the wireless communication system 10 may be a terminal-side device such as a mobile phone, a tablet personal computer (Tablet Personal Computer), a laptop computer (Laptop Computer) or notebook computer, a personal digital assistant (Personal Digital Assistant, PDA), a handheld computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), an in-vehicle device (VUE), a pedestrian terminal (PUE), or a smart home device (a home device with a wireless communication function, such as a refrigerator, a television, a washing machine, or furniture). The wearable device includes: a smart watch, a smart band, a smart headset, smart glasses, smart jewelry (a smart bracelet, a smart hand chain, a smart ring, a smart necklace, a smart anklet, a smart ankle chain), a smart wristband, smart clothing, a game machine, and the like. It should be noted that a specific type of the terminal 11 is not limited in embodiments of this application.

The network side device 12 in the wireless communication system 10 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a next generation NodeB (next generation NodeB, gNB) a home NodeB, a home evolved NodeB, a WLAN access point, a Wi-Fi node, a transmitting receiving point (Transmitting Receiving Point, TRP), or another appropriate term in the art. As long as the same technical effect is achieved, the base station is not limited to a specific technical term. It should be noted that the base station in the NR system is taken only as an example in embodiments of this application, but a specific type of the base station is not limited.

For example, the wireless communication system 10 shown in FIG. 1 is applied to a current NR system. A network element or entity corresponding to the terminal 11 may be a terminal in the NR system, and a network element or entity corresponding to the network side device 12 may be a gNB in the NR system.

With reference to the accompanying drawings, the following describes in detail the consistent LBT failure processing method provided in embodiments of this application by using some embodiments and application scenarios thereof.

It should be noted that names of messages between network elements, names of parameters in the messages, or the like in the following embodiments of this application are merely examples, and there may be other names during specific implementation. This is not specifically limited in embodiments of this application.

FIG. 2 is a consistent LBT failure processing method according to an embodiment of this application. The method may be applied to the wireless communication system 10 shown in FIG. 1. The method may include the following step 201.

Step 201: In a case that consistent LBT failures occur on an unlicensed band, a first terminal 11A performs a first failure processing operation.

It may be understood that, in a case that the first terminal 11A performs SL communication with a second terminal 11B through the unlicensed band, before sending data to the second terminal 11B through the unlicensed band, the first terminal 11A may perform LBT on the unlicensed band, to detect whether the unlicensed band is occupied. If the consistent LBT failures occur on the unlicensed band, it indicates that the unlicensed band is unavailable.

Optionally, in this embodiment of this application, that the consistent LBT failures occur on the unlicensed band may include any one of the following that:
in a case that a plurality of available resources exist on the unlicensed band, the consistent LBT failures occur on one of the plurality of available resources;
in a case that a plurality of available resources exist on the unlicensed band, the consistent LBT failures occur on each of the plurality of available resources;
in a case that only one available resource exists on the unlicensed band, the consistent LBT failures occur on the one available resource; and
in a case that a plurality of available resources exist on the unlicensed band, the consistent LBT failures occur on at least two available resources in the plurality of available resources.

The resource may be a resource block, a resource pool, or a bandwidth part (bandwidth part, BWP), or may be another possible resource. This is not specifically limited in this embodiment of this application.

Optionally, in this embodiment of this application, the first terminal 11A may detect, by using a timer (for example, an LBT failure detection timer) and a counter (for example, an LBT counter), whether the consistent LBT failures occur on a resource. For example, in a case that the first terminal 11A first receives LBT failure indication information from an underlying layer (for example, a MAC layer), the LBT failure detection timer may be started, and a value of the LBT counter is increased by 1. In a case that the LBT failure detection timer does not expire, each time the first terminal 11A receives the LBT failure indication information, the value of the LBT counter is increased by 1. After the value of the LBT counter is increased by 1, if the value of the LBT counter is greater than a specified threshold value, it indicates that the consistent LBT failures occur on the resource. After the LBT failure detection timer expires, the first terminal 11A may reset the value of the LBT counter to 0, to re-accumulate a quantity of LBT failures.

Optionally, in this embodiment of this application, the first failure processing operation may include at least one of the following:
performing a sidelink radio link failure (sidelink radio link failure, SL RLF) operation on an SL corresponding to the unlicensed band;
reporting the consistent LBT failures to a network side device 12;
suspending (suspending) the SL corresponding to the unlicensed band; and
performing SL transmission on a resource of a licensed band.

The SL corresponding to the unlicensed band may be an SL established on the unlicensed band, that is, an SL between two terminals that directly perform data transmission through the unlicensed band. For example, assuming that the first terminal 11A and the second terminal 11B may directly perform data transmission through an unlicensed band 1, an SL corresponding to the unlicensed band 1 is an SL between the first terminal 11A and the second terminal 11B.

Optionally, the SL may be identified by using a layer 2 identifier pair (layer 2 identifier pair, L2 ID pair) identifier, for example, the SL may be identified by using a source L2 ID and a target L2 ID.

In addition, the resource of the licensed band may be configured or dynamically indicated by the network side device 12 for the first terminal 11A, or may be predefined (for example, specified in a protocol), and may be specifically determined based on an actual use requirement.

In some embodiments, a transmission manner of the SL between the first terminal 11A and the second terminal 11B may be broadcast transmission or multicast transmission. In this case, the SL RLF operation may include at least one of the following:
resetting a media access control (media access control, MAC) entity corresponding to the SL; and
resetting or releasing an L2 entity corresponding to the SL.

Resetting the MAC entity corresponding to the SL may include at least one of the following:
releasing all HARQ resources corresponding to the L2 ID pair of the SL;
canceling air interface reporting corresponding to the L2 ID pair of the SL, for example, a status report (status report, SR) or a buffer status report (buffer status report, BSR);
stopping a timer corresponding to the L2 ID pair of the SL, for example, a related timer of discontinuous reception (discontinuous reception, DRX); and
resetting a variable corresponding to the L2 ID pair of the SL to an initial value.

In this embodiment of this application, the L2 entity corresponding to the SL may be a radio link control (radio link control, RLC) entity of a related bearer, a packet data convergence protocol (packet data convergence protocol, PDCP) entity, and a service data adaptation protocol (service data adaptation protocol, SDAP) entity.

In some other embodiments, a secondary transmission manner of the SL between the first terminal 11A and the second terminal 11B may be unicast transmission. The unicast transmission is established by using a PC5-S connection and a PC5-RRC connection that are between the first terminal 11A and the second terminal 11B. Therefore, in a case that the SL RLF operation is performed, in addition to resetting or releasing the MAC entity and the L2 entity, information related to the PC5-signaling (PC5-signaling, PC5-S) connection and the PC5-radio resource control (PC5-radio resource control, PC5-RRC) connection may be released. In this case, the SL RLF operation may include at least one of the following:
resetting the MAC entity corresponding to the SL
resetting or releasing the L2 entity corresponding to the SL;
releasing a data radio bearer (data radio bearer, DRB) corresponding to the SL;
releasing a signaling radio bearer (signaling radio bearer, SRB) corresponding to the SL;
deleting configuration information of the SL;
releasing the PC5-RRC connection corresponding to the SL;
releasing the PC5-S connection corresponding to the SL;
reporting an SL RLF to the network side device 12; and
reporting, to the network side device 12, that a reason for the SL RLF is the consistent LBT failures.

Optionally, in this embodiment of this application, an occasion for the reporting the consistent LBT failures to a network side device 12 may include any one of the following:
(1) In a case that the first terminal 11A is in an RRC connected (RRC connected) state, the first terminal 11A immediately reports the consistent LBT failures to the network side device 12.
(2) In a case that the first terminal 11Ais in an RRC idle (RRC idle) state or an RRC inactive (RRC inactive) state, the first terminal 11A immediately enters the RRC connected state, and reports the consistent LBT failures to the network side device 12.
(3) In a case that the first terminal 11A is in the RRC idle state or the RRC inactive state, after the first terminal 11A subsequently enters the RRC connected state, the first terminal reports the consistent LBT failures to the network side device 12.

Optionally, in this embodiment of this application, the first terminal 11A may report the consistent LBT failures to the network side device 12 by using SL UE information signaling or other uplink signaling.

That is, a manner in which the first terminal 11A reports to a network side may be the SL UE information signaling or other uplink signaling.

Optionally, in this embodiment of this application, the reporting the consistent LBT failures to a network side device 12 may include at least one of the following:
reporting occurrence time of the consistent LBT failures to the network side device 12; and
reporting, to the network side device 12, information about a resource on which the consistent LBT failures occur.

That is, content reported by the first terminal 11A to the network side device 12 may include at least one of time information of occurrence of the consistent LBT failures and location information of occurrence of the consistent LBT failures.

Optionally, in this embodiment of this application, the reporting the consistent LBT failures to a network side device 12 may include: reporting the consistent LBT failures to the network side device 12, and requesting a transmission resource from the network side device 12.

That is, in a case that reporting the consistent LBT failures to the network side device 12, the first terminal 11A requests the network side device 12 to allocate another available resource for the first terminal 11A, for example, the resource of the available licensed band.

For example, the first terminal 11A may report indication information and/or service requirement information. The indication information may display or implicitly indicate that the unlicensed band is unavailable, or display or implicitly indicate the consistent LBT failures.

Optionally, in this embodiment of this application, the suspending the SL corresponding to the unlicensed band may include at least one of the following:
in a case that no other available resource used to perform the SL transmission exists, suspending the SL corresponding to the unlicensed band; and
in a case that a service transmitted through the SL is a first service, suspending the SL corresponding to the unlicensed band.

That is, an occasion for the first terminal 11A to suspend the SL corresponding to the unlicensed band may include at least one of the foregoing.

It may be understood that, in a case that no other available resource used to perform the SL transmission exists on the network side, the first terminal 11A may suspend the SL, to perform SL transmission after a current busy situation of the unlicensed band is alleviated. Alternatively, in a case that the service transmitted by the first terminal 11A through the SL is not urgent, or a requirement for quality of service (Quality of Service, QoS) is low, or it is not appropriate to use another resource for transmission due to a tariff reason or the like, the first terminal 11A may also suspend the SL, to perform SL transmission after a current busy situation of the unlicensed band is alleviated.

The network side device 12 may configure for or indicate to the first terminal 11A a service that supports a suspension operation, or the first terminal 11A may determine, based on a service requirement of the first terminal 11A, a service that may be suspended.

That is, the first service may meet at least one of the following:
being configured by the network side device 12;
being indicated by the network side device 12; and
being determined by the first terminal 11A.

Optionally, in this embodiment of this application, the first terminal 11A may also determine, based on the transmission manner of the SL, whether to suspend the SL. For example, in a case that the transmission manner of the SL corresponding to the unlicensed band is the unicast transmission, the SL corresponding to the unlicensed band is not suspended. In a case that the transmission manner of the SL corresponding to the unlicensed band is multicast transmission or the groupcast transmission, the SL corresponding to the unlicensed band is suspended.

Optionally, in this embodiment of this application, the suspending the SL corresponding to the unlicensed band may include:
suspending at least a part of services on the SL corresponding to the unlicensed band; or
suspending at least a part of DRBs that carries at least a part of services on the SL corresponding to the unlicensed band.

That is, an object of the suspension operation may be the at least a part of services on the SL, or the at least a part that is of DRBs and that carries the at least a part of services on the SL.

Optionally, in a case that the suspension operation is for the at least a part of DRBs, after the at least a part of DRBs is suspended, the first terminal 11A may perform at least one of the following operations:
maintaining or resetting a sending status variable and a receiving status variable of a PDCP layer of the at least a part of DRBs;
maintaining or resetting a sending status variable and a receiving status variable of an RLC layer of the at least a part of DRBs; and
stopping or resetting a status that is of a MAC layer of the at least a part of DRBs and that is related to sending.

That is, the suspension operation may include at least one of the foregoing operations.

Maintaining the sending status variables and the receiving status variables of the RLC layer and the PDCP layer may be: The sending status variables and the receiving status variables of the RLC layer and the PDCP layer are unchanged. Resetting the sending status variables and the receiving status variables of the RLC layer and the PDCP layer may be: resetting the sending status variables and the receiving status variables of the RLC layer and the PDCP layer to an initial value.

In addition, the stopping or resetting a status that is of a MAC layer of the at least a part of DRBs and that is related to sending may include: stopping a process and a buffer of a hybrid automatic repeat request (hybrid automatic repeat request, HARQ), canceling SR or BSR triggering, canceling a channel state information reporting (channel state information reporting, CSI reporting) process, stopping a timer (for example, the DRX timer) at the transmit end, and resetting a status variable (for example, a token bucket variable related to a logical channel) at the transmit end.

Optionally, in a case that the first failure processing operation includes the suspending the SL corresponding to the unlicensed band, a suspension parameter of the SL corresponding to the unlicensed band may include at least one of the following:
a length of a first suspension timer;
a threshold value of a suspension attempt counter; and
a resumption condition of a suspension operation.

The resumption condition of the suspension operation indicates the condition to be met for resuming the suspension operation. For example, the resumption condition of the suspension operation may be consistent N LBT successes. On this basis, after the SL corresponding to the unlicensed band is suspended, in a case that the first terminal 11A detects the consistent N LBT successes, it indicates that the first terminal 11A may resume the suspension operation.

Optionally, the consistent LBT failure processing method provided in this embodiment of this application may further include the following step 203 and step 204.

Step 203: After the SL corresponding to the unlicensed band is suspended, the first terminal 11A starts the first suspension timer.

Step 204: After the first suspension timer expires, the first terminal 11A performs LBT.

In a case that the LBT fails, a value of the suspension attempt counter is increased by 1.

Optionally, in a case that the LBT succeeds, the first terminal 11A may accumulate a quantity of the consistent LBT successes by using a counter (for example, a consistent LBT success counter), to resume the suspension operation after the quantity of the consistent LBT successes meets the resumption condition of the suspension operation.

Optionally, in a case that the value of the suspension attempt counter is less than the threshold value of the suspension attempt counter, the method may further include the following step 205.

Step 205: The first terminal 11A restarts the first suspension timer, and continues to perform the LBT after the first suspension timer expires.

In each case that the LBT fails, the value of the suspension attempt counter is increased by 1.

It may be understood that, after a plurality of times of LBT detection, if detection results of the plurality of consistent times of LBT are all LBT failures (that is, the consistent LBT failures occur), the value of the suspension attempt counter is accumulated to the threshold value of the suspension attempt counter. In addition, the consistent LBT failures indicate that the unlicensed band is still unavailable.

Optionally, in a case that the value of the suspension attempt counter is greater than or equal to the threshold value of the suspension attempt counter, the method may further include the following step 206 or step 207.

Step 206: The first terminal 11A releases the SL corresponding to the unlicensed band.

Step 207: The first terminal 11A performs the SL RLF operation on the SL corresponding to the unlicensed band.

That is, after the SL corresponding to the unlicensed band is suspended, in a case that the value of the suspension attempt counter is greater than or equal to the threshold value of the suspension attempt counter, the first terminal 11A may determine that the unlicensed band is still unavailable, so that the first terminal 11A may release the SL corresponding to the unlicensed band, or perform the SL RLF operation on the SL corresponding to the unlicensed band.

Optionally, in a case that the first failure processing operation includes the suspending the SL corresponding to the unlicensed band, after the first terminal 11A performs the first failure processing operation, the consistent LBT failure processing method provided in this embodiment of this application may further include the following step 208 and step 209, or may include the following step 208 and step 210.

Step 208: The first terminal 11A continuously or periodically listens to the unlicensed band.

Step 209: In a case that at least one available resource exists on the unlicensed band, the first terminal 11A resumes (resume) the at least one available resource.

That is, in a case that an idle resource (an unoccupied resource) is detected through listening on the unlicensed band, the first terminal 11A resumes the idle resource.

Step 210: In a case that no available resource is detected through listening on the unlicensed band in a target duration, the first terminal 11A releases the SL corresponding to the unlicensed band or performs the SL RLF operation on the SL corresponding to the unlicensed band.

That is, after the first terminal 11A listens to the unlicensed band for a period of time, if an occupation situation of the unlicensed band is still not alleviated, that is, the unlicensed band is still unavailable, the first terminal 11A may release the SL corresponding to the unlicensed band or perform the SL RLF operation on the SL.

Optionally, as shown in FIG. 3, before step 201, the consistent LBT failure processing method provided in this embodiment of this application may further include the following step 201A.

Step 201A: The first terminal 11A determines the first failure processing operation based on first information.

The first information indicates the first failure processing operation performed in a case that the consistent LBT failures occur on the unlicensed band.

The first information may be configured by the network side device 12, or may be predefined (for example, specified in a protocol).

In a case that the first information is configured by the network side device 12, as shown in FIG. 3, before step 201A, the method may further include the following step 202.

Step 202: The network side device 12 configures the first information for the first terminal 11A.

For example, the network side device 12 may configure the first information for the first terminal 11A by using preconfiguration signaling, system information block (system information block, SIB) signaling, or dedicated RRC signaling. Certainly, the network side device 12 may alternatively configure the first information for the first terminal 11A in another manner. This is not specifically limited in this embodiment of this application.

In the consistent LBT failure processing method provided in this embodiment of this application, in a case that the consistent LBT failures occur on the unlicensed band, the first terminal may perform the first failure processing operation, so that the consistent LBT failures in the SL communication may be processed. In this way, a case that a terminal (for example, a local terminal) cannot process the consistent LBT failures in a process of performing SL communication through the unlicensed band can be avoided, so that a communication policy of the SL communication can be more complete.

The foregoing embodiment of this application provides the consistent LBT failure processing method applicable to a transmitting terminal (for example, the first terminal 11A in FIG. 1) in the SL communication, so that a problem that the transmitting terminal has the consistent LBT failures on the unlicensed band can be resolved. In addition, for the LBT failure that the transmitting terminal has on the unlicensed band, the following embodiment of this application further provides a consistent LBT processing method applicable to a receiving terminal (for example, the second terminal 11B in FIG. 2) in an SL.

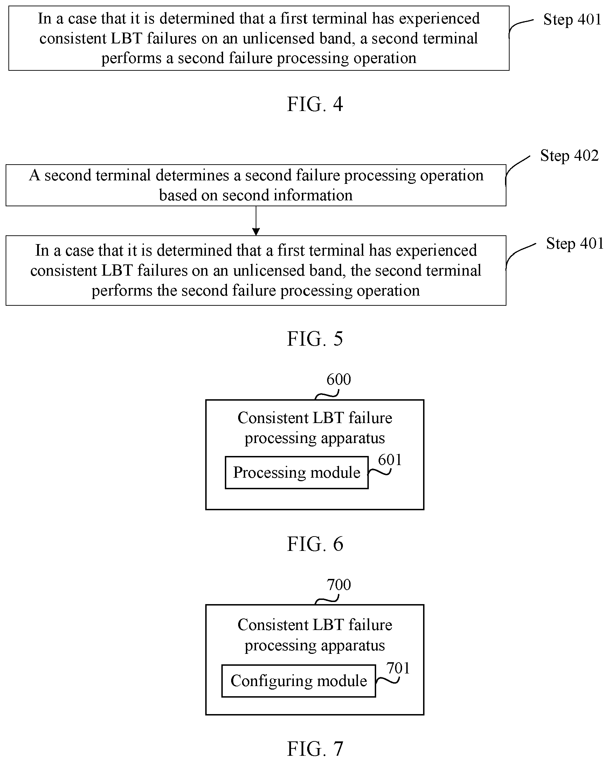

FIG. 4 is a consistent LBT failure processing method according to an embodiment of this application. The method may be executed by the second terminal 11B in the wireless communication system 10 shown in FIG. 1. The method includes the following step 401.

Step 401: In a case that it is determined that a first terminal 11A has consistent LBT failures on an unlicensed band, the second terminal 11B performs a second failure processing operation.

The first terminal 11A may be a terminal that has established an SL with the second terminal 11B.

The second failure processing operation may include any one of the following:
suspending the SL between the second terminal 11B and the first terminal 11A;
transmitting data that is between the second terminal 11B and the first terminal 11A in an HARQ feedback disabled manner; and
releasing the SL between the second terminal 11B and the first terminal 11A.

The suspending the SL between the second terminal 11B and the first terminal 11A may be stopping transmission of a part of or all services on the SL.

For example, the second terminal 11B may determine, based on a failure of a keeping-alive (keeping-alive) process of a PC5-S connection to the first terminal 11A or consistent feedback detection failures (that is, consistent reception of no feedback information), whether the first terminal 11A has the consistent LBT failures on the unlicensed band.

Optionally, in a case that the second failure processing operation is the transmitting data that is between the second terminal 11B and the first terminal 11A in a HARQ feedback disabled manner, for a service that requires reliability, the second terminal 11B may alternatively transmit the service in an active repetition (repetition) manner. For example, a service in an unacknowledged mode (unacknowledged mode, UM) may be transmitted in the active repetition manner.

Optionally, as shown in FIG. 5, before step 401, the consistent LBT failure processing method provided in this embodiment of this application may further include the following step 402.

Step 402: The second terminal 11B determines the second failure processing operation based on second information.

The second information may be configured by a network side device 12, or is determined based on negotiation information between the second terminal 11B and the first terminal 11A.

For example, the second terminal 11B may interact with the first terminal 11A based on configuration of the network side device 12 through a PC5-RRC connection, to synchronize whether to support the suspension operation or which services to support the suspension operation. If both the second terminal 11B and the first terminal 11A support the suspension operation, the second terminal 11B does not perform, on the SL between the second terminal 11B and the first terminal 11A or on the service on the SL, an SL RLF operation triggered by a discontinuous reception feedback mechanism (feedback DTX).

For another example, the first terminal 11A and the second terminal 11B may negotiate for, in a process of establishing the SL, whether to support the suspension operation or which services to support the suspension operation. If both the second terminal 11B and the first terminal 11A support the suspension operation, the second terminal does not perform, on the SL between the second terminal 11B and the first terminal 11A or on the service on the SL, an SL RLF operation triggered by a discontinuous reception feedback mechanism (feedback DTX).

In some embodiments, in a case that the second failure processing operation includes the suspending the SL between the second terminal 11B and the first terminal 11A, the method may further include the following step 403 and step 404, or may include the following step 403 and step 405.

Step 403: After the SL between the second terminal 11B and the first terminal 11A is suspended, the second terminal 11B starts a second suspension timer.

Step 404: After the second suspension timer expires, the second terminal 11B releases the SL between the second terminal 11B and the first terminal 11A.

That is, after suspending the SL between the second terminal 11B and the first terminal 11A, the second terminal 11B may release the SL between the second terminal 11B and the first terminal 11A after a period of time.

Step 405: After the second suspension timer expires, the second terminal 11B resumes the SL between the second terminal 11B and the first terminal 11A, to receive a data packet sent by the first terminal 11A.

That is, after suspending the SL between the second terminal 11B and the first terminal 11A, if the first terminal 11A resumes suspension after a period of time, the second terminal 11B may resume the SL between the second terminal 11B and the first terminal 11A.

Optionally, in this embodiment of this application, the suspending the SL between the second terminal 11B and the first terminal 11A may include any one of the following:
suspending at least a part of services on the SL; or
suspending at least a part of DRBs that carries at least a part of services on the SL.

In the consistent LBT failure processing method provided in this embodiment of this application, in a case that the first terminal has experienced the consistent LBT failures on the unlicensed band, the second terminal may perform the second failure processing operation, so that the consistent LBT failures in SL communication may be processed. In this way, a case that a terminal (for example, a peer terminal) cannot process the consistent LBT failures in a process of performing SL communication through the unlicensed band can be avoided, so that a communication policy of the SL communication can be more complete.

It should be noted that the consistent LBT failure processing method provided in embodiments of this application may be performed by a consistent LBT failure processing apparatus, or a control module that is in the consistent LBT failure processing apparatus and that is configured to perform the consistent LBT failure processing method. In embodiments of this application, an example in which the consistent LBT failure processing apparatus performs the consistent LBT failure processing method is used to describe the consistent LBT failure processing apparatus provided in embodiments of this application.

FIG. 6 is a consistent LBT failure processing apparatus 600 according to an embodiment of this application. The consistent LBT failure processing apparatus 600 includes a processing module 601. The processing module 601 is configured to: in a case that consistent LBT failures occur on an unlicensed band, perform a first failure processing operation.

The first failure processing operation includes at least one of the following:
performing an SL RLF operation on an SL corresponding to the unlicensed band;
reporting the consistent LBT failures to a network side device;
suspending the SL corresponding to the unlicensed band; and
performing SL transmission on a resource of a licensed band.

Optionally, in this embodiment of this application, the SL RLF operation may include at least one of the following:
resetting a MAC entity corresponding to the SL; and
resetting or releasing a layer 2 entity corresponding to the SL.

Optionally, in a case that a transmission manner of the SL is unicast transmission, the SL RLF operation further includes at least one of the following:
releasing a DRB corresponding to the SL;
releasing an SRB corresponding to the SL;
deleting configuration information of the SL;
releasing a PC5-RRC connection corresponding to the SL;
releasing a PC5-S connection corresponding to the SL;
reporting an SL RLF to the network side device; and
reporting, to the network side device, that a reason for the SL RLF is the consistent LBT failures.

Optionally, in this embodiment of this application, that the consistent LBT failures occur on the unlicensed band may include any one of the following that:
in a case that a plurality of available resources exist on the unlicensed band, the consistent LBT failures occur on one of the plurality of available resources;
in a case that a plurality of available resources exist on the unlicensed band, the consistent LBT failures occur on each of the plurality of available resources; and
in a case that only one available resource exists on the unlicensed band, the consistent LBT failures occur on the one available resource.

Optionally, in this embodiment of this application, the reporting the consistent LBT failures to a network side device may include at least one of the following:
reporting occurrence time of the consistent LBT failures to the network side device; and
reporting, to the network side device, information about a resource on which the consistent LBT failures occur.

Optionally, in this embodiment of this application, the reporting the consistent LBT failures to a network side device may include:
reporting the consistent LBT failures to the network side device, and requesting a transmission resource from the network side device.

Optionally, in this embodiment of this application, the suspending the SL corresponding to the unlicensed band may include at least one of the following:
in a case that no other available resource used to perform the SL transmission exists, suspending the SL; and
in a case that a service transmitted through the SL is a first service, suspending the SL.

Optionally, in this embodiment of this application, the first service may meet at least one of the following:
being configured by the network side device;
being indicated by the network side device; and
being determined by the first terminal.

Optionally, in this embodiment of this application, the suspending the SL corresponding to the unlicensed band may include:
suspending at least a part of services on the SL; or
suspending at least a part of DRBs that carries at least a part of services on the SL.

Optionally, in this embodiment of this application, after the at least a part of DRBs are suspended, the processing module 601 may further perform at least one of the following operations:
maintaining or resetting a sending status variable and a receiving status variable of a PDCP layer of the at least a part of DRBs;
maintaining or resetting a sending status variable and a receiving status variable of an RLC layer of the at least a part of DRBs; and
stopping or resetting a status that is of a MAC layer of the at least a part of DRBs and that is related to sending.

Optionally, in this embodiment of this application, in a case that the first failure processing operation includes the suspending the SL corresponding to the unlicensed band, a suspension parameter of the suspending the SL includes at least one of the following:
a length of a first suspension timer;
a threshold value of a suspension attempt counter; and
a resumption condition of a suspension operation.

Optionally, in this embodiment of this application, the processing module 601 is further configured to:
after the SL corresponding to the unlicensed band is suspended, start the first suspension timer; and
after the first suspension timer expires, perform LBT.

In a case that the LBT fails, a value of the suspension attempt counter is increased by 1.

Optionally, in this embodiment of this application, the processing module 601 is further configured to:
in a case that the value of the suspension attempt counter is less than the threshold value, restart the first suspension timer; and
after the first suspension timer expires, continue to perform the LBT.

In each case that the LBT fails, the value of the suspension attempt counter is increased by 1.

Optionally, in this embodiment of this application, the processing module 601 is further configured to:
in a case that the value of the suspension attempt counter is greater than or equal to the threshold value, release the SL or perform the SL RLF operation on the SL.

Optionally, in this embodiment of this application, the processing module 601 is further configured to:
in a case that the first failure processing operation includes the suspending the SL corresponding to the unlicensed band, continuously or periodically listen to the unlicensed band after the first failure processing operation is performed; and
in a case that at least one available resource exists on the unlicensed band, resume the at least one available resource; or
in a case that no available resource is detected through listening on the unlicensed band in a target duration, release the SL or perform the SL RLF operation on the SL.

Optionally, in this embodiment of this application, the processing module 601 is further configured to:
before performing the first failure processing operation, determine the first failure processing operation based on first information.

The first information is configured by the network side device or predefined.

Based on the consistent LBT failure processing apparatus provided in this embodiment of this application, in a case that the consistent LBT failures occur on the unlicensed band, the apparatus may perform the first failure processing operation. In this solution, in a case that the consistent LBT failures occur on the unlicensed band, the apparatus may perform the first failure processing operation, so that the consistent LBT failures in SL communication can be processed. In this way, a case that a terminal (for example, a local terminal) cannot process the consistent LBT failures in a process of performing SL communication through the unlicensed band can be avoided.

FIG. 7 is a consistent LBT failure processing apparatus 700 according to an embodiment of this application. The consistent LBT failure processing apparatus 700 includes a configuring module 701. The configuring module 701 is used to configure first information for a first terminal. The first information indicates a first failure processing operation performed in a case that consistent LBT failures occur on an unlicensed band.

The first failure processing operation includes at least one of the following:
performing an SL RLF operation on an SL corresponding to the unlicensed band;
reporting the consistent LBT failures to a network side device;
suspending the SL corresponding to the unlicensed band; and
performing SL transmission on a resource of a licensed band.

Optionally, in this embodiment of this application, the SL RLF operation may include at least one of the following:
resetting a MAC entity corresponding to the SL; and
resetting or releasing a layer 2 entity corresponding to the SL.

Optionally, in this embodiment of this application, in a case that a transmission manner of the SL is unicast transmission, the SL RLF operation further includes at least one of the following:
releasing a DRB corresponding to the SL;
releasing an SRB corresponding to the SL;
deleting configuration information of the SL;
releasing a PC5-RRC connection corresponding to the SL;
reporting an SL RLF to the network side device; and
reporting, to the network side device, that a reason for the SL RLF is the consistent LBT failures.

Optionally, in this embodiment of this application, that the consistent LBT failures occur on the unlicensed band may include any one of the following that:
in a case that a plurality of available resources exist on the unlicensed band, the consistent LBT failures occur on one of the plurality of available resources;
in a case that a plurality of available resources exist on the unlicensed band, the consistent LBT failures occur on each of the plurality of available resources; and
in a case that only one available resource exists on the unlicensed band, the consistent LBT failures occur on the one available resource.

Optionally, in this embodiment of this application, the reporting the consistent LBT failures to a network side device may include at least one of the following:
reporting occurrence time of the consistent LBT failures to the network side device; and
reporting, to the network side device, information about a resource on which the consistent LBT failures occur.

Optionally, in this embodiment of this application, the reporting the consistent LBT failures to a network side device may include:
reporting the consistent LBT failures to the network side device, and requesting a transmission resource from the network side device.

Optionally, in this embodiment of this application, the suspending the SL corresponding to the unlicensed band may include at least one of the following:
in a case that no other available resource used to perform the SL transmission exists, suspending the SL; and
in a case that a service transmitted through the SL is a first service, suspending the SL.

Optionally, the first service may meet at least one of the following:
being configured by the network side device;
being indicated by the network side device; and
being determined by the first terminal.

Optionally, in this embodiment of this application, the suspending the SL corresponding to the unlicensed band may include:
suspending at least a part of services on the SL; or
suspending at least a part of data radio bearers DRBs that carries at least a part of services on the SL.

Optionally, in this embodiment of this application, in a case that the first failure processing operation includes the suspending the SL corresponding to the unlicensed band, a suspension parameter of the suspending the SL may include at least one of the following:
a length of a first suspension timer;
a threshold value of a suspension attempt counter; and
a resumption condition of a suspension operation.

Based on the consistent LBT failure processing apparatus provided in this embodiment of this application, the first information may be configured for the first terminal. The first information indicates the first failure processing operation performed in a case that the consistent LBT failures occur on the unlicensed band. In this way, in a case that the consistent LBT failures occur on the unlicensed frequency band, the first terminal may determine the first failure processing operation based on the first information, so that the first failure processing operation can be performed, and the consistent LBT failures in SL communication can be processed. In this way, a case that a terminal (for example, a local terminal) cannot process the consistent LBT failures in a process of performing SL communication through the unlicensed band can be avoided.

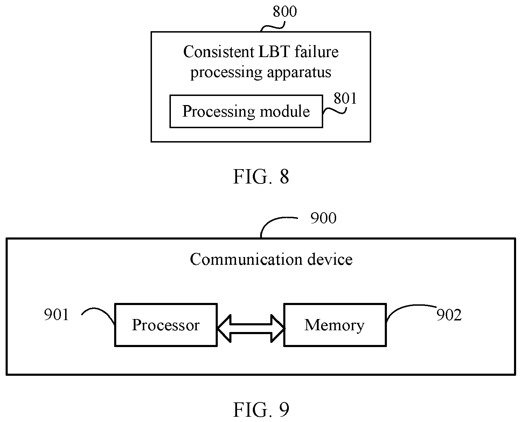

FIG. 8 is a consistent LBT failure processing apparatus 800 according to an embodiment of this application. The consistent LBT failure processing apparatus 800 includes a processing module 801. The processing module 801 is configured to: in a case that it is determined that a first terminal has experienced consistent LBT failures on an unlicensed band, perform a second failure processing operation. The first terminal is a terminal that has established a sidelink SL with a second terminal.

The second failure processing operation includes any one of the following:
suspending the SL between the second terminal and the first terminal;
transmitting data that is between the second terminal and the first terminal in a hybrid automatic repeat request HARQ feedback disabled manner; and
releasing the SL between the second terminal and the first terminal.

Optionally, in this embodiment of this application, the processing module 801 may further be configured to:
in a case that the second failure processing operation includes the suspending the SL between the second terminal and the first terminal, after the SL is suspended, start a second suspension timer; and
after the second suspension timer expires, release the SL; or
after the second suspension timer expires, resume the SL to receive a data packet sent by the first terminal.

Optionally, in this embodiment of this application, the suspending the SL may include:
suspending at least a part of services on the SL; or
suspending at least a part of data radio bearers DRBs that carries at least a part of services on the SL.

Optionally, in this embodiment of this application, the processing module 801 may further be configured to:
before performing the second failure processing operation, determine the second failure processing operation based on second information.

The second information is configured by a network side device, or is determined based on negotiation information between the second terminal and the first terminal.

Based on the consistent LBT failure processing apparatus provided in this embodiment of this application, in a case that the first terminal has experienced the consistent LBT failures on the unlicensed band, the apparatus may perform the second failure processing operation, so that the consistent LBT failures in SL communication may be processed. In this way, a case that a terminal (for example, a peer terminal) cannot process the consistent LBT failures in a process of performing SL communication through the unlicensed band can be avoided.

The consistent LBT failure processing apparatus in embodiments of this application may be an apparatus, an apparatus or electronic device with an operating system, or may be a component, an integrated circuit, or a chip in a terminal. The apparatus or electronic device may be a mobile terminal, or a non-mobile terminal. For example, the mobile terminal may include but is not limited to the foregoing listed types of the terminal 11. The non-mobile terminal may be a server, a network attached storage (Network Attached Storage, NAS), a personal computer (personal computer, PC), a television (television, TV), a teller machine, a self-service machine, or the like. This is not specifically limited in this embodiment of this application.

The consistent LBT failure processing apparatus provided in this embodiment of this application can implement processes implemented in the method embodiments in FIG. 1 to FIG. 5, and achieve the same technical effect. To avoid repetition, details are not described herein again.

Optionally, as shown in FIG. 9, an embodiment of this application further provides a communication device 900, including a processor 901, a memory 902, and a program or instructions stored in the memory 902 and executable on the processor 901. For example, when the communication device 900 is a terminal, and the program or instructions are executed by the processor 901, processes of the foregoing consistent LBT failure processing method embodiments are implemented, and the same technical effect can be achieved. When the communication device 900 is a network side device, and the program or instructions are executed by the processor 901, processes of the foregoing consistent LBT failure processing method embodiments are implemented, and the same technical effect can be achieved. To avoid repetition, details are not described herein again. The communication device 900 may be a terminal or a network side device.

An embodiment of this application further provides a first terminal, including a processor. The processor is configured to: in a case that the first terminal has experienced consistent LBT failures on an unlicensed band, perform a first failure processing operation. This embodiment corresponds to the method embodiment shown in FIG. 2. Each implementation process and implementation of the foregoing method embodiment may be applicable to this embodiment, and the same technical effect can be achieved.

An embodiment of this application further provides a second terminal, including a processor. The processor is configured to: in a case that it is determined that a first terminal has experienced consistent LBT failures on an unlicensed band, perform a second failure processing operation. The first terminal is a terminal that has established an SL with the second terminal. This embodiment corresponds to the method embodiment shown in FIG. 4. Each implementation process and implementation of the foregoing method embodiment may be applicable to this embodiment, and the same technical effect can be achieved.

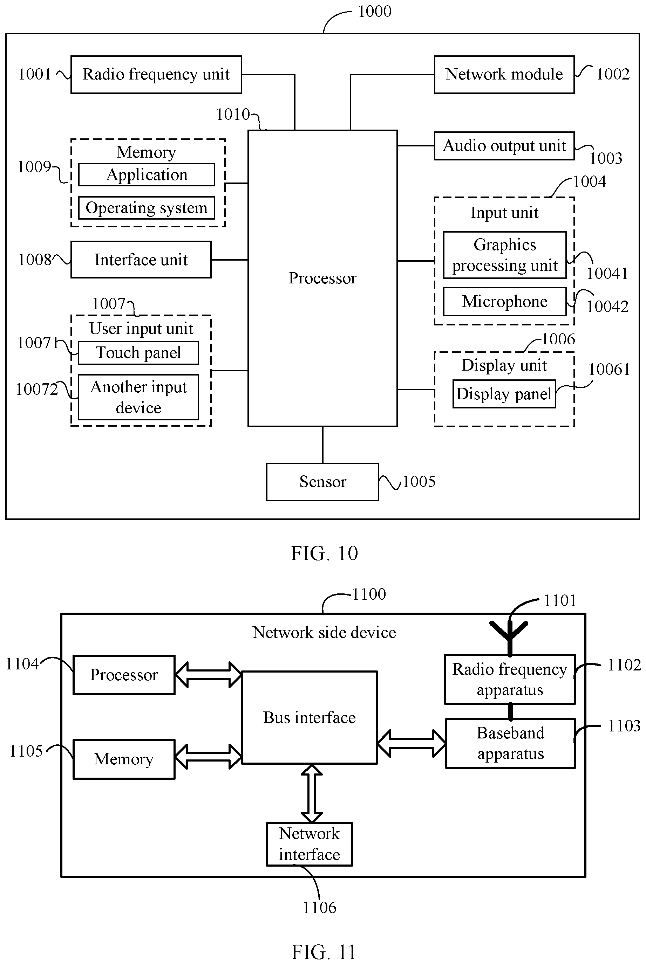

For example, FIG. 10 is a schematic diagram of a structure of hardware of a terminal that implements the first terminal and/or the second terminal in the foregoing embodiments of this application.

The terminal 1000 includes but is not limited to at least a part of components of a radio frequency unit 1001, a network module 1002, an audio output unit 1003, an input unit 1004, a sensor 1005, a display unit 1006, a user input unit 1007, an interface unit 1008, a memory 1009, and a processor 1010.

A person skilled in the art can understand that the terminal 1000 may further include a power supply (such as a battery) that supplies power to each component. The power supply may be logically connected to the processor 1010 by using a power supply management system, to implement functions such as charging and discharging management, and power consumption management by using the power supply management system. The terminal structure shown in FIG. 10 constitutes no limitation on the terminal, and the terminal may include more or fewer components than those shown in the figure, or combine some components, or have different component arrangements. Details are not described herein.

It should be understood that in this embodiment of this application, the input unit 1004 may include a graphics processing unit (Graphics Processing Unit, GPU) 10041 and a microphone 10042. The graphics processing unit 10041 processes image data of a static picture or a video obtained by an image capture apparatus (for example, a camera) in a video capture mode or an image capture mode. The display unit 1006 may include a display panel 10061, and the display panel 10061 may be configured in a form of a liquid crystal display, an organic light-emitting diode, or the like. The user input unit 1007 includes a touch panel 10071 and another input device 10072. The touch panel 10071 is also referred to as a touchscreen. The touch panel 10071 may include two parts: a touch detection apparatus and a touch controller. The another input device 10072 may include but is not limited to a physical keyboard, a functional button (such as a volume control button or a power on/off button), a trackball, a mouse, and a joystick. Details are not described herein.

In this embodiment of this application, the radio frequency unit 1001 receives downlink data from a network side device and then sends the downlink data to the processor 1010 for processing; and sends uplink data to the network side device. Usually, the radio frequency unit 1001 includes but is not limited to an antenna, at least one amplifier, a transceiver, a coupler, a low noise amplifier, a duplexer, and the like.

The memory 1009 may be configured to store a software program or instructions as well as various data. The memory 1009 may mainly include a program or instruction storage area and a data storage area. The program or instruction storage area may store an operating system, an application or instructions required for at least one function (for example, a sound play function or an image play function), and the like. In addition, the memory 1009 may include a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, a flash memory device, or another non-volatile solid-state storage device.

The processor 1010 may include one or more processing units. Optionally, the processor 1010 may integrate an application processor and a modem processor. The application processor mainly processes an operating system, a user interface, an application or instructions, and the like. The modem processor, such as a baseband processor, mainly processes wireless communication. It may be understood that, alternatively, the modem processor may not be integrated into the processor 1010.

The processor 1010 is configured to: in a case that the first terminal has experienced consistent LBT failures on an unlicensed band, perform a first failure processing operation.

Alternatively, the processor 1010 is configured to: in a case that it is determined that the first terminal has experienced consistent LBT failures on an unlicensed band, perform a second failure processing operation.

An embodiment of this application further provides a network side device, including a processor. The processor is used to configure first information for a first terminal. The first information indicates a first failure processing operation performed in a case that consistent LBT failures occur on an unlicensed band. The network side device embodiment corresponds to the foregoing method embodiment of the network side device. Each implementation process and implementation of the foregoing method embodiment may be applicable to the network side device embodiment, and the same technical effect can be achieved.

Specifically, an embodiment of this application further provides a network side device. As shown in FIG. 11, the network side device 1100 includes an antenna 1101, a radio frequency apparatus 1102, and a baseband apparatus 1103. The antenna 1101 is connected to the radio frequency apparatus 1102. In an uplink direction, the radio frequency apparatus 1102 receives information by using the antenna 1101, and sends the received information to the baseband apparatus 1103 for processing. In a downlink direction, the baseband apparatus 1103 processes information that needs to be sent, and sends processed information to the radio frequency apparatus 1102. The radio frequency apparatus 1102 processes the received information, and sends processed information by using the antenna 1101.

The frequency band processing apparatus may be located in the baseband apparatus 1103. The method performed by the network side device in the foregoing embodiment may be implemented in the baseband apparatus 1103. The baseband apparatus 1103 includes a processor 1104 and a memory 1105.

The baseband apparatus 1103 may include, for example, at least one baseband board, where a plurality of chips are disposed on the baseband board. As shown in FIG. 11, one of the chips is, for example, the processor 1104, and is connected to the memory 1105, to invoke a program in the memory 1105 to perform the operations of the network side device shown in the foregoing method embodiment.

The baseband apparatus 1103 may further include a network interface 1106, configured to exchange information with the radio frequency apparatus 1102, where the interface is, for example, a common public radio interface (common public radio interface, CPRI for short).

Specifically, the network side device in this embodiment of the present invention further includes instructions or a program stored in the memory 1105 and executable on the processor 1104. The processor 1104 invokes the instructions or program in the memory 1105 to perform the method performed by the modules shown in FIG. 7, and the same technical effect is achieved. To avoid repetition, details are not described herein again.

An embodiment of this application further provides a readable storage medium. The readable storage medium stores a program or instructions. When the program or instructions are executed by a processor, processes of the foregoing consistent LBT failure processing method embodiments are implemented, and the same technical effect can be achieved. To avoid repetition, details are not described herein again. It should be noted that the readable storage medium may be non-volatile or may be volatile. In addition, the readable storage medium may be non-transient.

The processor is a processor in the terminal in the foregoing embodiment. The readable storage medium includes a computer-readable storage medium, such as a computer read-only memory (Read-Only Memory, ROM), a random access memory (Random Access Memory, RAM), a magnetic disk, or an optical disc.

An embodiment of this application further provides a chip. The chip includes a processor and a communication interface. The communication interface is coupled to the processor. The processor is configured to run a program or instructions, to implement processes of the foregoing consistent LBT failure processing method embodiments, and the same technical effect can be achieved. To avoid repetition, details are not described herein again.

It should be understood that the chip mentioned in this embodiment of this application may also be referred to as a system-level chip, a system chip, a chip system, or a system on chip.

An embodiment of this application further provides a computer program/program product. The computer program/program product is stored in a volatile and/or non-volatile storage medium. The program/program product is executed by at least one processor, to implement the steps of the consistent LBT failure processing method according to the first aspect, the steps of the consistent LBT failure processing method according to the second aspect, or the steps of the consistent LBT failure processing method according to the third aspect.

It should be noted that, in this specification, the term "include", "comprise", or any other variant thereof is intended to cover a non-exclusive inclusion, so that a process, a method, an article, or an apparatus that includes a list of elements not only includes those elements but also includes other elements which are not expressly listed, or further includes elements inherent to this process, method, article, or apparatus. In absence of more constraints, an element preceded by "includes a..." does not preclude the existence of other identical elements in the process, method, article, or apparatus that includes the element. In addition, it should be noted that the scope of the method and the apparatus in the implementations of this application is not limited to performing functions in an illustrated or discussed sequence, and may further include performing functions in a basically simultaneous manner or in a reverse sequence according to the functions concerned. For example, the described method may be performed in an order different from that described, and the steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially, or the part contributing to the prior art may be implemented in a form of a computer software product. The computer software product is stored in a storage medium (for example, a ROM/RAM, a magnetic disk, or a compact disc), and includes a plurality of instructions for instructing a terminal (which may be a mobile phone, a computer, a server, an air conditioner, a network side device, or the like) to perform the method described in the embodiments of this application.

The embodiments of this application are described above with reference to the accompanying drawings, but this application is not limited to the foregoing specific implementations, and the foregoing specific implementations are only illustrative and not restrictive. Under the enlightenment of this application, a person of ordinary skill in the art can make many forms without departing from the purpose of this application and the protection scope of the claims, all of which fall within the protection of this application.

## Claims

1. A consistent listen before talk LBT failure processing method, comprising:
in a case that consistent LBT failures occur on an unlicensed band, performing, by a first terminal, a first failure processing operation, wherein
the first failure processing operation comprises at least one of following:
performing an SL radio link failure RLF operation on a sidelink SL corresponding to the unlicensed band;
reporting the consistent LBT failures to a network side device;
suspending the SL corresponding to the unlicensed band; and
performing SL transmission on a resource of a licensed band.

2. The method according to claim 1, wherein the SL RLF operation comprises at least one of following:
resetting a media access control MAC entity corresponding to the SL; and
resetting or releasing a layer 2 entity corresponding to the SL.

3. The method according to claim 2, wherein in a case that a transmission manner of the SL is unicast transmission, the SL RLF operation further comprises at least one of following:
releasing a data radio bearer DRB corresponding to the SL;
releasing a signaling radio bearer SRB corresponding to the SL;
deleting configuration information of the SL;
releasing a PC5-radio resource control RRC connection corresponding to the SL;
releasing a PC5-S connection corresponding to the SL;
reporting an SL RLF to the network side device; and
reporting, to the network side device, that a reason for the SL RLF is the consistent LBT failures.

4. The method according to claim 1, wherein that the consistent LBT failures occur on the unlicensed band comprises any one of following that:
in a case that a plurality of available resources exist on the unlicensed band, the consistent LBT failures occur on one of the plurality of available resources;
in a case that a plurality of available resources exist on the unlicensed band, the consistent LBT failures occur on each of the plurality of available resources; and
in a case that only one available resource exists on the unlicensed band, the consistent LBT failures occur on the one available resource.

5. The method according to claim 1, wherein the reporting the consistent LBT failures to a network side device comprises at least one of following:
reporting occurrence time of the consistent LBT failures to the network side device; and
reporting, to the network side device, information about a resource on which the consistent LBT failures occur.

6. The method according to claim 1, wherein the reporting the consistent LBT failures to a network side device comprises:
reporting the consistent LBT failures to the network side device, and requesting a transmission resource from the network side device.

7. The method according to claim 1, wherein the suspending the SL corresponding to the unlicensed band comprises at least one of following:
in a case that no other available resource used to perform the SL transmission exists, suspending the SL; and
in a case that a service transmitted through the SL is a first service, suspending the SL.

8. The method according to claim 7, wherein the first service meets at least one of following:
being configured by the network side device;
being indicated by the network side device; and
being determined by the first terminal.

9. The method according to claim 1, wherein the suspending the SL corresponding to the unlicensed band comprises:
suspending at least a part of services on the SL; or
suspending at least a part of DRBs that carries at least a part of services on the SL.

10. The method according to claim 9, wherein after the at least a part of DRBs are suspended, the first terminal performs at least one of following operations:
maintaining or resetting a sending status variable and a receiving status variable of a packet data convergence protocol PDCP layer of the at least a part of DRBs;
maintaining or resetting a sending status variable and a receiving status variable of a radio link control RLC layer of the at least a part of DRBs; and
stopping or resetting a status that is of a MAC layer of the at least a part of DRBs and that is related to sending.

11. The method according to claim 1, wherein in a case that the first failure processing operation comprises the suspending the SL corresponding to the unlicensed band, a suspension parameter of the suspending the SL comprises at least one of following:
a length of a first suspension timer;
a threshold value of a suspension attempt counter; and
a resumption condition of a suspension operation.

12. The method according to claim 11, wherein the method further comprises:
after the SL corresponding to the unlicensed band is suspended, starting, by the first terminal, the first suspension timer; and
after the first suspension timer expires, performing, by the first terminal, LBT, wherein
in a case that the LBT fails, a value of the suspension attempt counter is increased by 1.

13. The method according to claim 12, wherein in a case that the value of the suspension attempt counter is less than the threshold value, the method further comprises:
restarting, by the first terminal, the first suspension timer, and continuing to perform the LBT after the first suspension timer expires, wherein
in each case that the LBT fails, the value of the suspension attempt counter is increased by 1.

14. The method according to claim 12, wherein in a case that the value of the suspension attempt counter is greater than or equal to the threshold value, the method further comprises:
releasing, by the first terminal, the SL; or performing, by the first terminal, the SL RLF operation on the SL.

15. The method according to claim 1, wherein in a case that the first failure processing operation comprises the suspending the SL corresponding to the unlicensed band, after the performing, by a first terminal, a first failure processing operation, the method further comprises:
continuously or periodically listening to, by the first terminal, the unlicensed band; and
in a case that at least one available resource exists on the unlicensed band, resuming, by the first terminal, the at least one available resource; or
in a case that no available resource is detected through listening on the unlicensed band in a target duration, releasing, by the first terminal, the SL or performing the SL RLF operation on the SL.

16. The method according to claim 1, wherein before the performing, by a first terminal, a first failure processing operation, the method further comprises:
determining, by the first terminal, the first failure processing operation based on first information, wherein
the first information is configured by the network side device or predefined.

17. A consistent listen before talk LBT failure processing method, comprising:
configuring, by a network side device, first information for a first terminal, wherein the first information indicates a first failure processing operation performed in a case that consistent LBT failures occur on an unlicensed band, wherein
the first failure processing operation comprises at least one of following:
performing an SL radio link failure RLF operation on a sidelink SL corresponding to the unlicensed band;
reporting the consistent LBT failures to the network side device;
suspending the SL corresponding to the unlicensed band; and
performing SL transmission on a resource of a licensed band.

18. The method according to claim 17, wherein the SL RLF operation comprises at least one of following:
resetting a media access control MAC entity corresponding to the SL; and
resetting or releasing a layer 2 entity corresponding to the SL.

19. The method according to claim 18, wherein in a case that a transmission manner of the SL is unicast transmission, the SL RLF operation further comprises at least one of following:
releasing a data radio bearer DRB corresponding to the SL;
releasing a signaling radio bearer SRB corresponding to the SL;
deleting configuration information of the SL;
releasing a PC5-radio resource control RRC connection corresponding to the SL;
reporting an SL RLF to the network side device; and
reporting, to the network side device, that a reason for the SL RLF is the consistent LBT failures.

20. The method according to claim 17, wherein that the consistent LBT failures occur on the unlicensed band comprises any one of following that:
in a case that a plurality of available resources exist on the unlicensed band, the consistent LBT failures occur on one of the plurality of available resources;
in a case that a plurality of available resources exist on the unlicensed band, the consistent LBT failures occur on each of the plurality of available resources; and
in a case that only one available resource exists on the unlicensed band, the consistent LBT failures occur in the one available resource.

21. The method according to claim 17, wherein the reporting the consistent LBT failures to the network side device comprises at least one of following:
reporting occurrence time of the consistent LBT failures to the network side device; and
reporting, to the network side device, information about a resource on which the consistent LBT failures occur.

22. The method according to claim 17, wherein the reporting the consistent LBT failures to the network side device comprises:
reporting the consistent LBT failures to the network side device, and requesting a transmission resource from the network side device.

23. The method according to claim 17, wherein the suspending the SL corresponding to the unlicensed band comprises at least one of following:
in a case that no other available resource used to perform the SL transmission exists, suspending the SL; and
in a case that a service transmitted through the SL is a first service, suspending the SL.

24. The method according to claim 23, wherein the first service meets at least one of following:
being configured by the network side device;
being indicated by the network side device; and
being determined by the first terminal.

25. The method according to claim 17, wherein the suspending the SL corresponding to the unlicensed band comprises:
suspending at least a part of services on the SL; or
suspending at least a part of DRBs that carries at least a part of services on the SL.

26. The method according to claim 17, wherein in a case that the first failure processing operation comprises the suspending the SL corresponding to the unlicensed band, a suspension parameter of the suspending the SL comprises at least one of following:
a length of a first suspension timer;
a threshold value of a suspension attempt counter; and
a resumption condition of a suspension operation.

27. A consistent listen before talk LBT failure processing method, comprising:
in a case that it is determined that a first terminal has experienced consistent LBT failures on an unlicensed band, performing, by a second terminal, a second failure processing operation, wherein the first terminal is a terminal that has established a sidelink SL with the second terminal, wherein
the second failure processing operation comprises any one of following:
suspending the SL between the second terminal and the first terminal;
transmitting data that is between the second terminal and the first terminal in a hybrid automatic repeat request HARQ feedback disabled manner; and
releasing the SL between the second terminal and the first terminal.

28. The method according to claim 27, wherein in a case that the second failure processing operation comprises the suspending the SL between the second terminal and the first terminal, the method further comprises:
after the SL is suspended, starting, by the second terminal, a second suspension timer; and
after the second suspension timer expires, releasing, by the second terminal, the SL; or
after the second suspension timer expires, resuming, by the second terminal, the SL to receive a data packet sent by the first terminal.

29. The method according to claim 27, wherein the suspending the SL comprises:
suspending at least a part of services on the SL; or
suspending at least a part of data radio bearers DRBs that carries at least a part of services on the SL.

30. The method according to claim 27, wherein before the second terminal performs the second failure processing operation, the method further comprises:
determining, by the second terminal, the second failure processing operation based on second information, wherein
the second information is configured by a network side device, or is determined based on negotiation information between the second terminal and the first terminal.

31. A consistent listen before talk LBT failure processing apparatus, wherein the consistent LBT failure processing apparatus comprises a processing module, wherein
the processing module is configured to: in a case that a first terminal has experienced consistent LBT failures on an unlicensed band, perform a first failure processing operation, wherein
the first failure processing operation comprises at least one of following:
performing an SL radio link failure RLF operation on a sidelink SL corresponding to the unlicensed band;
reporting the consistent LBT failures to a network side device;
suspending the SL corresponding to the unlicensed band; and
performing SL transmission on a resource of a licensed band.

32. The apparatus according to claim 31, wherein in a case that the first failure processing operation comprises the suspending the SL corresponding to the unlicensed band, a suspension parameter of the suspending the SL comprises at least one of following:
a length of a first suspension timer;
a threshold value of a suspension attempt counter; and
a resumption condition of a suspension operation.

33. The apparatus according to claim 32, wherein the processing module is further configured to:
after the SL corresponding to the unlicensed band is suspended, start the first suspension timer; and
after the first suspension timer expires, perform LBT, wherein
in a case that the LBT fails, a value of the suspension attempt counter is increased by 1.

34. The apparatus according to claim 33, wherein the processing module is further configured to:
in a case that the value of the suspension attempt counter is less than the threshold value, restart the first suspension timer; and
after the first suspension timer expires, continue to perform LBT, wherein
in each case that the LBT fails, the value of the suspension attempt counter is increased by 1.

35. The apparatus according to claim 33, wherein the processing module is further configured to:
in a case that the value of the suspension attempt counter is greater than or equal to the threshold value, release the SL or perform the SL RLF operation on the SL.

36. The apparatus according to claim 31, wherein the processing module is further configured to:
in a case that the first failure processing operation comprises the suspending the SL corresponding to the unlicensed band, continuously or periodically listen to the unlicensed band after the first failure processing operation is performed; and
in a case that at least one available resource exists on the unlicensed band, resume the at least one available resource; or
in a case that no available resource is detected through listening on the unlicensed band in a target duration, release the SL or perform the SL RLF operation on the SL.

37. The apparatus according to claim 31, wherein the processing module is further configured to:
before performing the first failure processing operation, determine the first failure processing operation based on first information, wherein
the first information is configured by the network side device or predefined.

38. A consistent listen before talk LBT failure processing apparatus, wherein the consistent LBT failure processing apparatus comprises a configuring module, wherein
the configuring module is used to configure first information for a first terminal, wherein the first information indicates a first failure processing operation performed in a case that consistent LBT failures occur on an unlicensed band, wherein
the first failure processing operation comprises at least one of following:
performing an SL radio link failure RLF operation on a sidelink SL corresponding to the unlicensed band;
reporting the consistent LBT failures to the network side device;
suspending the SL corresponding to the unlicensed band; and
performing SL transmission on a resource of a licensed band.

39. A consistent listen before talk LBT failure processing apparatus, wherein the consistent LBT failure processing apparatus comprises a processing module, wherein
the processing module is configured to: in a case that it is determined that a first terminal has experienced consistent LBT failures on an unlicensed band, perform a second failure processing operation, wherein the first terminal is a terminal that has established a sidelink SL with a second terminal, wherein
the second failure processing operation comprises any one of following:
suspending the SL between the second terminal and the first terminal;
transmitting data that is between the second terminal and the first terminal in a hybrid automatic repeat request HARQ feedback disabled manner; and
releasing the SL between the second terminal and the first terminal.

40. A first terminal, comprising a processor, a memory, and a program or instructions stored in the memory and executable on the processor, wherein when the program or the instructions are executed by the processor, steps of the consistent listen before talk LBT failure processing method according to any one of claims 1 to 16 are implemented.

41. A network side device, comprising a processor, a memory, and a program or instructions stored in the memory and executable on the processor, wherein when the program or the instructions are executed by the processor, steps of the consistent listen before talk LBT failure processing method according to any one of claims 17 to 26 are implemented.

42. A second terminal, comprising a processor, a memory, and a program or instructions stored in the memory and executable on the processor, wherein when the program or the instructions are executed by the processor, steps of the consistent listen before talk LBT failure processing method according to any one of claims 27 to 30 are implemented.

43. A readable storage medium, wherein the readable storage medium stores a program or instructions, and when the program or the instructions are executed by a processor, steps of the consistent listen before talk LBT failure processing method according to any one of claims 1 to 16 are implemented, steps of the LBT failure processing method according to any one of claims 17 to 26 are implemented, or steps of the consistent listen before talk LBT failure processing method according to any one of claims 27 to 30 are implemented.
